# EUROPÄISCHE PATENTANMELDUNG

(11) **EP 1 011 070 A1**
(43) Veröffentlichungstag der Anmeldung: **21.06.2000**
(21) Anmeldenummer: 99124506.9
(22) Anmeldetag: 09.12.1999
(51) Int. Cl.: G06K 19/07, G06K 19/04, F17C 13/00

(54) **Transponder mit Ringantenne für Druckgasflaschen**

(30) Priorität: 15.12.1998 DE 19857722
(71) Anmelder: MESSER GRIESHEIM GMBH, 60547 Frankfurt (DE)
(72) Erfinder: Landen, Guido, 40670 Meerbusch (DE)

(57) **Zusammenfassung**

Die Vorrichtung (1) mit elektronischem Datenträger zur Identifikation und Kennzeichnung von Druckgasflaschen (5) enthält einen Haltering (3), innerhalb des Halteringes (3) der elektronische Datenträger mit einer ringförmigen Antenne (12) angeordnet ist. Der Haltering (3) besteht vorzugsweise aus zwei Teilen (Halbschalen), die durch eine Verrasterung unlösbar miteinander verbunden werden. Vorteilhaft bilden Träger (13), Antenne (12) und elektronischer Datenträger, insbesondere Transponder-Chip, eine Einheit, genannt Ringantenne (2), die vom Haltering (3) aufgenommen wird.

## Beschreibung

Die Erfindung betrifft eine Vorrichtung nach dem Oberbegriff von Anspruch 1.

Eine Vorrichtung für die Aufnahme elektronischer Datenträger für Druckgasflaschen wird in DE 44 09 313 (MG 1901) beschrieben. Zur Aufnahme eines Transponders dient eine Lasche an einem Kunststoffring, der unterhalb des Druckgasflaschenkappengewindes angeordnet wird.

Ein Chipträger aus Kunststoff wird in EP 0 772 152 (MG 1968) beschrieben. Der Chipträger besitzt Münzform und befindet sich außerhalb eines Kunststoffbefestigungsringes.

Bei den bekannten Vorrichtungen ist der Transponder-Chip an exponierter Stelle, daher besteht die Gefahr der Beschädigung bei dem Transport der Druckgasflaschen. Die Datenübertragung von dem Transponder-Chip an der Druckgasflasche kann bisher nur in unmittelbarer Nähe zum Transponder-Chip an einer Stelle an der Druckgasflasche erfolgen. Das Lesegerät muß daher zur Datenübernahme sehr genau an einem Punkt positioniert werden.

Die Aufgabe der Erfindung besteht in der Schaffung einer Vorrichtung, die die genannten Nachteile vermeidet.

Gelöst wurde die Aufgabe durch eine Vorrichtung mit den Merkmalen von Anspruch 1.
Die Vorrichtung enthält einen Haltering, einen elektronischen Datenträger und eine Ringantenne. Die Vorrichtung wird in der Regel am Flaschenhalsring von Druckgasflaschen, vorzugsweise unlösbar, befestigt. Druckgasflaschen sind beispielsweise aus Stahl oder Aluminium.

Der Ring (Haltering) zur Aufnahme von einem elektronischem Datenträger und einer Ringantenne wird im allgemeinen aus einem formbaren, elektromagnetische Wellen nicht abschirmenden Material wie Kunststoff hergestellt. Vorzugsweise dienen thermoplastische Kunststoffe wie Polyamid, Polyolefin (z. B. Polyethylen, Polypropylen, PVC), Polyester (PET, PBT, LCP), Polysterol oder Polyacetal (z. B. Polyoxymethylen) zur Herstellung.

Der Haltering wird vorzugsweise aus zwei Teilen gebildet. Die Teile sind in der Regel halbkreisförmig und werden zu dem kreisförmigen Haltering zusammengesetzt. Die Teile werden in der Regel mechanisch verbunden, z. B. durch eine Steckvorrichtung an den Teilen (Steckverbindung, vorzugsweise unlösbar einrastend), durch einen Klipsverschluß, durch Verschraubung oder durch ein Befestigungsband (z. B. wie Kabelbinder). Die Verbindung der Teile kann auch durch Verkleben oder Verschweißen erfolgen.

Der Haltering kann je nach Anforderungen und Gegebenheiten modifiziert und an die verschiedenen Druckgasflaschentypen angepaßt werden. Bei einem Außendurchmesser von weniger als 140 mm (z. B. 125 mm) ist die Vorrichtung geeignet für 10 Liter-Druckgasflaschen (geometrisches Volumen von 10 Litern). Der engste Innendurchmesser (Kragen) des Halteringes ist so bemessen, daß der Kragen in die unterhalb des Gewindes des Flaschenhalsringes übliche rundumlaufende Einbuchtung greift. Bei einer 10 Liter-Druckgasflasche ist der Innendurchmesser des Halteringes ca. 78 mm, das heißt der Kragen bildet eine innere Kreisöffnung von ca. 78 mm.

Die Ringantenne besteht in der Regel aus einem ringförmigen Träger und der Antenne. Der ringförmige Träger ist z. B. ein Teil mit U-Profil, ein Spulenkörper oder ein anderes ringförmiges Kunststoffprofil. Der Träger besteht wie der Haltering vorzugsweise aus einem thermoplastischen Kunststoff. Der ringförmige Träger kann auch Teil des Halteringes sein. Die Antenne, das heißt der Antennendraht, wird am Träger angebracht, z. B. durch Aufwickeln oder Einlegen in einen ringförmigen Hohlraum, der in der Regel an einer Seite, z. B. Oberseite oder Außenseite, offen ist. Nach Anbringen der Antenne am Träger wird die Antenne vorzugsweise durch Ausfüllen des Hohlraumes mit einer Gießmasse (z. B. aushärtende Gießmasse für Elektronikteile) fixiert. Die Ringantenne, das heißt Träger mit Antenne, hat zum Beispiel einen Außendurchmesser von 120 mm, einen Innendurchmesser von 110 mm und eine Dicke von 5mm, ausgelegt für einen Haltering für 10 Liter-Druckgasflaschen. Die Ringantenne wird vorzugsweise im Haltering so angeordnet, daß die Ringantenne zum Metallkörper der Flaschenhalsringes einen Mindestabstand von 5 mm aufweist. Durch den Mindestabstand werden Störeffekte bei der Datenübertragung durch den Metallkörper vermieden und eine einwandfreie Datenübertragung gewährleistet.

Als elektronischer Datenträger dient vorzugsweise ein Datenträger-Chip oder Transponder-Chip, der in der besonders bevorzugten Ausführung lesbar und mehrmals beschreibbar ist. In der Regel werden über Radiowellen die im Chip gespeicherten Daten an ein mobiles Erfassungsgerät (Lesegerät) gesendet, dort angezeigt, zwischengespeichert und anschließend an eine zentrale Recheneinheit mit z. B. ein Datenbank übertragen. Mit den Daten wird z. B. ein detaillierter Lieferschein, der Flaschennummern Produktnummern, Produktbezeichnungen und Flaschenvolumen aufführt, automatisch erstellt. Eine Software bietet im Lagerbetrieb eine Vielzahl von Auswertungsmöglichkeiten, unter anderem Bestands-, Bewegung-, Standzeiten-, Mietkontroll- und TÜV-Terminlisten. Der Transponder-Chip ist mit der Ringantenne verbunden. Transponder-Chip und Ringantenne werden in dem Haltering untergebracht. Ein vorzugsweise eingesetzter Transponder-Chip ist ein
Plättchen mit einer Fläche von 5x5 mm oder kleiner. Die Vorrichtung mit Haltering und integriertem Transponder-Chip mit Ringantenne ist sehr vorteilhaft bei der Kennzeichnung oder Identifikation von Druckgasflaschen. Die in der Regel unlösbar an der Druckgasflasche angebrachte Vorrichtung bietet dem Transponder-Chip großen Schutz und durch die Ringantenne ist der Transponder-Chip von allen Seiten les- und beschreibbar, was bisher nicht möglich war. Durch die im wesentlichen rotationssymmetrische Anordnung, die eine richtungsunabhängige Datenübernahme oder Datenübertragung ermöglicht, lassen sich automatische Lese/Schreibprozesse, z. B. im Füllprozeß von Druckgasflaschen, einfacher durchführen.

Eine besonders bevorzugte Ausführung des Halteringes besteht aus zwei halbkreisförmigen Hälften oder Halbschalen, die im wesentlichen gleich sind. Der Haltering ist weitgehend symmetrisch aufgebaut. Es sind in der Regel keine Teile außerhalb des Halteringes angebracht. Die Ringantenne ist eine Einheit aus Antenne, Träger und elektronischem Datenträger, vorzugsweise Transponder-Chip. Zur Montage einer bevorzugten Vorrichtung wird die Ringantenne in die eine Hälfte des Halteringes eingelegt, über den Halsring der Druckgasflasche gestülpt, dann die zweite Hälfte über die Ringantenne gezogen und die Hälften am Halsring zusammen gesteckt. Die Hälften werden besonders bevorzugt durch eine einrastende, nicht mehr lösbare Steckverbindung arretiert, wobei als einziges Werkzeug beim Verrastern eine handelsübliche Zange benötigt wird.

Die Ringantenne bietet Vorteile bei der Handhabung. Die Halterung ist witterungsbeständig, diebstahl- und manipulationssicher und leicht - ohne spezielles Werkzeug - schnell und einfach zu montieren.

Die Erfindung wird anhand der Zeichnung erläutert.
Fig. 1 zeigt ein Schema einer Vorrichtung mit Haltering und eingelegter, vergossener Antenne.
Fig. 2 zeigt ein Schema einer Vorrichtung mit geteiltem Haltering und Ringantenne mit separatem Träger.
Fig. 3 zeigt schematisch ein Teil (eine Hälfte) des Halteringes von Fig. 2.
Fig. 4 zeigt ein Schema einer Vorrichtung mit Haltering, der aus Teilen mit außen liegender Verrasterung.

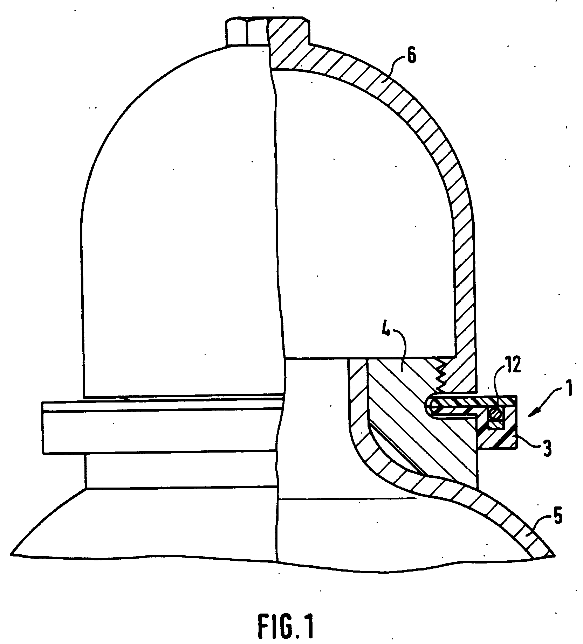

Fig. 1 zeigt eine Vorrichtung 1 mit Haltering 3 und Antenne 2 (rechts der Achse A-A als Querschnitt). Die Antenne 2 ist als Antennendrahtwickelung in einen ringförmigen Hohlraum in dem Haltering 1 gelegt, der zur Fixierung der Antenne mit einer Gießmasse ausgefüllt ist. Der Haltering 1 fügt sich mit einem Kragen in die übliche Einbuchtung unterhalb des Gewindes des Flaschenhalsringes 4. Der Flaschenhalsring sitzt auf der Druckgasflasche 5. Eine Flaschenkappe 6 ist auf den Flaschenhalsring 4 geschraubt. Der Transponder-Chip (nicht gezeigt) ist in dem Raum, in dem die Antenne 2 angeordnet ist, untergebracht. Die die ringförmige Antenne 2 hat einen Mindestabstand von 5 mm zum Flaschenhalsring. Die Druckgasflasche 5, Flaschenhalsring 4 und Flaschenkappe 6 sind z. B. aus Stahl.

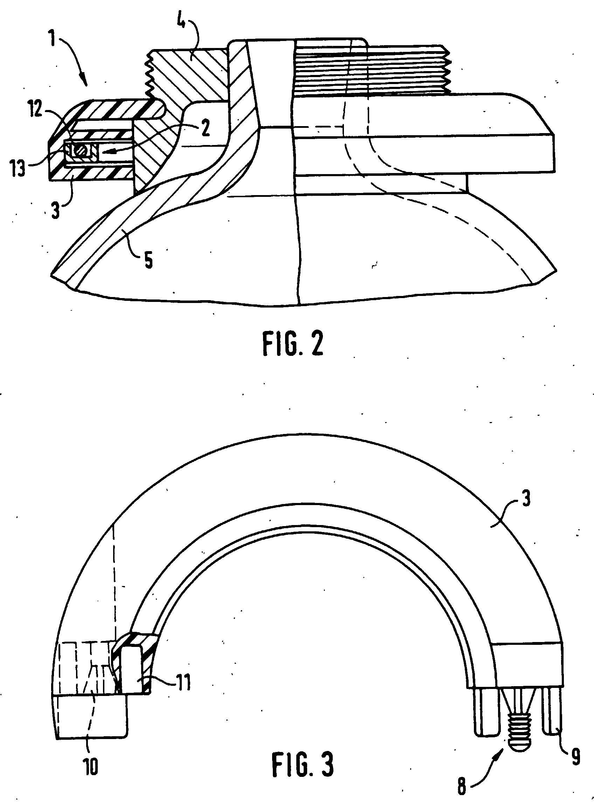

Fig. 2 zeigt einen zweiteiligen Haltering 3. Der Haltering 3 besteht bei dem gezeigten Beispiel aus zwei identischen Teilen (Halbringe), die unlösbar zusammengesteckt werden. Ein Halbring ist in Fig. 3 gezeigt und wird unten näher beschrieben. Der Haltering 3 weist an der Oberseite einen überstehenden Kragen auf, der zur Befestigung am Flaschenhalsring 4 dient. Der Kragen steht bei dem gezeigten Beispiel (für 10 Liter Stahlflasche) etwa 8mm gegenüber den anderen Haltering-Innenkanten nach innen über. Der Kragen greift in die Einbuchtung am Flaschenhalsring unterhalb des Gewindes. Der Haltering 3 enthält mindestens eine ringförmige Hohlkammer zur Aufnahme der Ringantenne 2. Die Ringantenne 2 weist einen Träger 13 und die Antenne 12 (Antennendraht) auf. Der Träger ist vorzugsweise rinnenförmig zur Aufnahme der Antenne 12. Der Transponder-Chip (nicht gezeigt) kann in dem Raum bei der Antenne angeordnet werden. Es kann auch im Träger 13 ein besonderer Raum zur Aufnahme des Transponder-Chips vorgesehen werden. Zur Montage der Vorrichtung 1 mit Haltering 3 mit Ringantenne 2 an dem Flaschenhalsring 4 wird die Ringantenne 2 in die Hohlkammer eines Halbringes gesteckt und diese Anordnung mit der inneren Öffnung der Ringantenne 2 über das Gewinde am Flaschenhalsring 4 geführt und am Flaschenhalsring in der vorgesehenen Position ausgerichtet. Dann wird ein zweiter (vorzugsweise identisch aufgebauter) Halbring auf das freie Ende der Ringantenne 2 geschoben und die beiden Halbringe mit Hilfe einer Zange zusammengesteckt, wobei eine unlösbare Rastverbindung zwischen den beiden Halbringen bewirkt wird. Die Ringantenne 2 bzw. die Antenne 12 hat einen minimalen Abstand von 5 mm zum Flaschenhalsring 4, wodurch Störungen bei der Datenübertragung vermieden werden. Der Haltering 3 hat im Beispiel einen Außendurchmesser von 125 mm, einen unteren Innendurchmesser von 94 mm, einen oberen Innendurchmesser von 78 mm, eine Höhe von 19 mm und eine Wandstärke um 1 mm. Der Haltering 3 ist aus Polyoxymethylen (POM). Die Ringantenne 2 hat im Beispiel einen Außendurchmesser von 120 mm, einen Innendurchmesser von 110 mm und eine Höhe von 5 mm. Die Antenne 12 in dem rinnenförmigen Raum des Trägers 13 ist vorzugsweise vergossen.

Fig. 3 zeigt ein Schema eines Halbringes von Haltering 3. Zur Verbindung zweier Halbringe weist der Halbring einen Stecker 8, einen Stift 9, eine Steckdose 10 und eine Stiftdose 11 auf. Stecker 8 und Steckdose 10 sind so gestaltet, daß beim Zusammenstecken eine unlösbare Verbindung entsteht. Zu diesem Zweck hat der Stecker 8 hakenförmige Rippen, die in der Steckdose 10 einrasten. Der gezeigte Halbring besitzt auf der linken Seite eine überstehende Lippe, die in eine entsprechende Aussparung auf der rechten Seite des Halbringes paßt.

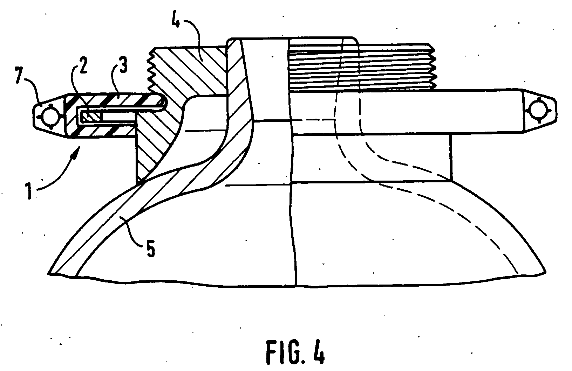

Fig. 4 zeigt eine Vorrichtung 1 für Druckgasflaschen 5 mit niedrigerem Flaschenhalsring 3, z. B. bei Aluminium-Druckgasflaschen oder geschweißten Druckgasflaschen. Der Haltering 3 besteht aus zwei Halbringen (Halbschalen), die mittels außen am Haltering 3 liegenden Verbindungsteilen 7 zur unlösbaren einrastenden Verbindung (Verrasterung).

### Bezugszeichenliste

- 1: Vorrichtung
- 2: Ringantenne (Träger mit Antenne)
- 3: Haltering
- 4: Flaschenhalsring
- 5: Druckgasflasche
- 6: Druckgasflaschenkappe (Schraubkappe)
- 7: Verbindungsteil
- 8: Stecker
- 9: Stift
- 10: Steckdose
- 11: Stiftdose
- 12: Antenne
- 13: Träger

## Patentansprüche

1. Vorrichtung (1) mit elektronischem Datenträger zur Identifikation und Kennzeichnung von Druckgasflaschen (5), dadurch gekennzeichnet, daß die Vorrichtung (1) einen Haltering (3) enthält und innerhalb des Halteringes (3) der elektronische Datenträger mit einer ringförmigen Antenne (12) angeordnet ist.

2. Vorrichtung (1) nach Anspruch 1, dadurch gekennzeichnet, daß der Haltering (3) aus mindestens zwei Teilen zusammengefügt wird.

3. Vorrichtung (1) nach Anspruch 1, dadurch gekennzeichnet, daß der Haltering (3) aus zwei identischen Teilen zusammengesetzt wird.

4. Vorrichtung (1) nach einem der Ansprüche 1 bis 3, dadurch gekennzeichnet, daß ein Transponder-Chip als elektronischer Datenträger dient.

5. Vorrichtung (1) nach einem der Ansprüche 1 bis 4, dadurch gekennzeichnet, daß der Haltering (3) unlösbar mit der Druckgasflasche (5) verbunden ist.

6. Vorrichtung (1) nach einem der Ansprüche 1 bis 5, dadurch gekennzeichnet, daß die Vorrichtung (1) eine Einheit, die Ringantenne (2), mit Träger (13), Antenne (12) und elektronischem Datenträger enthält.

7. Vorrichtung (1) nach einem der Ansprüche 1 bis 6, dadurch gekennzeichnet, daß die Vorrichtung (1) außerhalb des Halteringes (3) keine überstehenden Teile aufweist.

8. Vorrichtung (1) nach einem der Ansprüche 1 bis 7, dadurch gekennzeichnet, daß der Haltering (3) weitgehend symmetrisch aufgebaut ist.

9. Druckgasflasche (5) mit einer Vorrichtung (1) nach einem der Ansprüche 1 bis 8.
